Europäisches Patentamt

European Patent Office

Office européen des brevets

(19)

(11) **EP 0 745 449 B1**

(12) **FASCICULE DE BREVET EUROPEEN**

(45) Date de publication et mention
de la délivrance du brevet:
**26.05.1999 Bulletin 1999/21**

(51) Int. Cl.⁶: **B23K 15/00**

(21) Numéro de dépôt: **96400629.0**

(22) Date de dépôt: **25.03.1996**

(54) **Procédé de soudage bord à bord de deux flans métalliques et pièce de véhicule automobile obtenue par ce procédé**

Stumpfschweissverfahren von zwei metallischen Blechplatten und nach diesem Verfahren hergestelltes Automobilteil

Method of butt-welding two metallic sheets and automobile vehicle part obtained by this method

(84) Etats contractants désignés:
**AT BE CH DE DK ES FR GB GR IE IT LI LU NL PT SE**

(30) Priorité: **04.04.1995 FR 9503972**

(43) Date de publication de la demande:
**04.12.1996 Bulletin 1996/49**

(73) Titulaire: **SOLLAC S.A.**
**92800 Puteaux (FR)**

(72) Inventeurs:
• **Krzys, Jean-Marc**
**59240 Dunkerque (FR)**
• **Oberle, Hugues**
**59240 Dunkerque (FR)**
• **Peru, Gilles**
**59240 Dunkerque (FR)**
• **Verrier, Pascal**
**62580 Lumbres (FR)**

(74) Mandataire:
**Lanceplaine, Jean-Claude et al**
**CABINET LAVOIX**
**2, Place d'Estienne d'Orves**
**75441 Paris Cédex 09 (FR)**

(56) Documents cités:
**EP-A- 0 023 174          EP-A- 0 081 615**
**WO-A-94/07642          DE-A- 1 440 291**
**DE-A- 3 117 527          DE-A- 3 307 699**
**DE-A- 4 240 824          US-A- 4 628 178**

• **PATENT ABSTRACTS OF JAPAN vol. 007, no. 165 (M-230), 20 Juillet 1958 & JP-A-58 070985 (SUMITOMO DENKI KOGYO KK), 27 Avril 1983,**
• **PATENT ABSTRACTS OF JAPAN vol. 008, no. 128 (M-302), 14 Juin 1984 & JP-A-59 030489 (HITACHI SEISAKUSHO KK), 18 Février 1984,**

## Description

La présente invention a pour objet un procédé de soudage de deux flans métalliques dont l'un est de l'acier et l'autre est en un matériau métallique dont la température de fusion est inférieure de plus de 400°C à la température de fusion de l'acier.

La présente invention a également pour objet une pièce de véhicule automobile, notamment de carrosserie et de structure obtenue par ce procédé.

Dans de nombreuses applications industrielles les matériaux constituant le produit manufacturé sont différents les uns des autres et sont employés en fonction des propriétés de chacun.

C'est de plus en plus le cas pour la réalisation de certaines pièces de véhicules automobiles dans le but d'obtenir un allégement de ceux-ci et de ce fait une diminution de la consommation de carburant.

En effet, toutes les zones d'une même pièce ne subissent pas les mêmes efforts et les mêmes sollicitations comme par exemple les planchers des véhicules, les éléments de la carrosserie ou encore les chapelles de suspension.

Par conséquent, la tendance des constructeurs automobiles pour réaliser ce type de pièces est d'utiliser dans les zones nécessitant un emboutissage profond et/ou des opérations de soudage des flans métalliques en acier et dans les autres zones des flans métalliques en aluminium ou en alliage d'aluminium.

On sait que l'acier présente une bonne aptitude à l'emboutissage, une bonne tenue mécanique et une forte densité alors que l'aluminium ou les alliages d'aluminium présentent une bonne aptitude au filage, une faible tenue mécanique et une faible densité.

C'est le cas également dans le domaine de la construction des méthaniers dans lesquels le stockage du méthane est effectué à une très basse température.

Or, on sait que l'acier perd ses propriétés mécaniques car le stockage du méthane est réalisé à une température qui est inférieure à la température de transition ductile-fragile de l'acier qui est comprise entre -30 et -60°C pour des aciers standards.

A l'inverse les caractéristiques mécaniques de l'aluminium ont plutôt tendance à augmenter à des températures basses.

Par conséquent, il est séduisant d'utiliser des flans métalliques en aluminium ou en alliage d'aluminium pour la cuve elle-même et des flans métalliques en acier pour la structure de cette cuve.

La technique la plus intéressante pour assembler ces flans métalliques composés de deux matériaux différents est le soudage car il évite l'apport de pièces, comme par exemple des vis ou des rivets, et il n'y a aucun apport de matière pour la constitution de la soudure lorsque celle-ci est réalisée à la molette, par points ou au moyen d'un faisceau à haute densité d'énergie.

Ces techniques d'assemblage vis à vis des solutions avec apport de pièces permettent aussi de réduire la corrosion galvanique.

Mais, le soudage de deux matériaux différents, comme par exemple de l'acier avec de l'aluminium ou de l'alliage d'aluminium pose des problèmes et implique la maîtrise des éléments suivants :

- la mise à température des deux matériaux,
- la préparation des surfaces à souder, c'est à dire l'élimination des impuretés et des oxydes,
- et la réalisation de l'assemblage dans des conditions de température et de propreté adéquates.

Jusqu'à présent plusieurs techniques de soudage sont utilisées pour assembler deux matériaux différents.

Une de ces techniques est le colaminage qui consiste à chauffer la zone à souder par un courant haute fréquence et à appliquer par l'intermédiaire de rouleaux de laminage les deux matériaux l'un sur l'autre.

Cette technique s'applique lorsque l'on désire utiliser des joints de transition, mais n'est pas applicable pour le soudage d'une plaque en aluminium ou en alliage d'aluminium sur une structure en acier.

Une autre technique est utilisée pour le soudage de deux barreaux, un en acier et l'autre en aluminium, qui consiste à chauffer les extrémités à souder des deux barreaux, à mettre en contact ces deux extrémités et à faire passer dans les barreaux un courant alternatif à haute intensité.

L'assemblage est réalisé par l'intermédiaire d'un projectile qui vient propulser l'un des barreaux sur l'autre.

Mais, le temps de chauffage est relativement long ce qui peut notoirement modifier les caractéristiques de l'acier et de l'aluminium.

De plus, ce procédé reste un procédé de soudage par points donc discontinu.

On connaît également une autre technique qui est le soudage par points, mais qui présente comme inconvénient principal d'être discontinu.

On connaît aussi le soudage par explosion qui consiste à mettre l'une au-dessus de l'autre les deux tôles et à ménager entre celles-ci un espace contrôlé, puis à déposer sur la tôle supérieure une couche d'explosif.

La détonation est initiée à un des coins ou sur l'un des bords et elle se propage en provoquant au fur et à mesure la projection de la plaque supérieure sur la plaque inférieure.

Cette technique nécessite de grands espaces inhabités ou la construction de locaux blindés ce qui limite la taille des tôles à souder.

On connaît encore le soudage par friction consistant, dans un premier temps, à procéder à un apport de chaleur par frottement des deux pièces à assembler, puis à forger ces deux pièces.

Mais, avec cette technique, il est nécessaire d'atténuer les effets de la déformation par des traitements thermiques qui peuvent provoquer la formation de composés intermétalliques à l'interface.

D'autre part, compte tenu de l'importance des pressions à développer lors du forgeage, la surface soudée ne peut guère dépasser quelques dizaines de centimètres carrés.

Enfin, on connaît le soudage par diffusion qui a pour inconvénient de nécessiter une durée de soudage importante ce qui constitue un obstacle de taille pour une industrialisation.

Ces différents procédés ne sont pas applicables au soudage bord à bord de deux flans métalliques dont l'un est de l'acier possédant une température de fusion inférieure à 400° C à la temperature de fusion du métal constituant l'autre flan métallique et par conséquent d'obtenir des flans raboutés et fabriqués à des cadences élevées.

En effet, le soudage bord à bord de deux flans métalliques dont l'un est de l'acier et l'autre de l'aluminium ou un alliage d'aluminium pose des problèmes qui résident, d'une part, dans le fait que la température de fusion de l'acier est, selon les nuances, comprise entre 1450 et 1700°C alors que la température de fusion de l'aluminium est comprise entre 550 et 700°C et, d'autre part, dans le fait qu'il se forme des composés intermétalliques au niveau de l'interface des deux flans métalliques.

Le document JP-A-59-30489 décrit le soudage bord à bord de deux pièces, en particulier une pièce en alliage de fer avec une pièce en aluminium. Selon ce document le faisceau est dirigé du côté de la pièce en aluminium, qui fond, tandis que l'autre matériau, qui ne fond pas, est diffusé dans l'aluminium.

Le document JP-A-58-70985 décrit le soudage de métaux différents, en particulier le soudage d'une pièce en alliage dur fritté sur une pièce en acier. Le faisceau est dirigé sur la pièce en alliage dur fritté, qui a une température de fusion plus élevée, ainsi qu'une conductivité thermique meilleure.

Enfin, le document DE-A-1440291 décrit le soudage bord à bord de deux flans métalliques, l'un en acier et l'autre en aluminium, par un procédé de soudage à l'arc, l'arc étant maintenu sur la pièce en aluminium.

L'invention a pour but de proposer un procédé de soudage bord à bord permettant de réaliser des assemblages entre deux flans métalliques dont l'un est de l'acier et l'autre est en un matériau métallique dont la température de fusion est inférieure de plus de 400°C à la température de fusion de l'acier, comme par exemple de l'acier et de l'aluminium ou un alliage d'aluminium afin de réaliser des assemblages pouvant être mis en oeuvre pour des applications industrielles nécessitant des caractéristiques d'emboutissage des flans métalliques et un faible coût de fabrication.

L'invention a donc pour objet un procédé de soudage bord à bord de deux flans métalliques dont le premier est de l'acier et le second flan métallique est en un matériau métallique dont la température de fusion est inférieure de plus de 400°C à la température de fusion de l'acier, comprenant les étapes suivantes:

- on positionne les deux flans métalliques en contact au niveau de leurs faces latérales à rabouter,
- on maintient les deux flans métalliques en contact par des moyens de bridage,
- on dirige, sur l'une des faces principales du premier flan métallique, un faisceau à haute densité d'énergie traversant le premier flan métallique et dont le point de focalisation est situé à une distance déterminée du plan de joint de manière à générer au niveau dudit plan de joint une température égale à la température de fusion du métal du second flan métallique plus ou moins 10%,
- on déplace le faisceau à haute densité d'énergie parallèlement au plan de joint pour réaliser un joint soudé au niveau des faces latérales raboutées des deux flans métalliques.

Selon d'autres caractéristiques de l'invention :

- la distance entre l'axe vertical passant par le point de focalisation du faisceau à haute densité d'énergie et le plan de joint est comprise entre 5 et 50% de l'épaisseur du flan métallique ayant la plus faible épaisseur, et de préférence comprise entre 20 et 40% ce qui correspond, pour des flans métalliques d'épaisseur égale à 1mm, à une distance comprise entre 0,2 et 0,4mm,
- la distance optimale entre l'axe vertical passant par le point de focalisation du faisceau à haute densité d'énergie et le plan de joint est déterminée par la formule :

$$d_{opt} = \frac{\sqrt{2/\pi e} \times P}{(T_f - T_o) \times 2 \times e_p \times \rho \times c}$$

où :

P est l'énergie linéaire nécessaire pour fondre le volume décrit par la zone fondue en soudage,
e est le log népérien de 10
$T_f$ est la température de fusion du métal constituant le second flan métallique,
$T_o$ est la température ambiante,
$e_p$ est l'épaisseur du premier flan métallique en acier,
$\rho$ est la masse volumique de l'acier,
c est la chaleur spécifique de l'acier,

- le maintien des deux flans métalliques en contact est réalisé à proximité du plan de joint de ces flans métalliques,

- on exerce, pendant le maintien des deux flans métalliques, une pression latérale dirigée vers le plan de joint pour rattraper au niveau dudit plan de joint, les jeux d'usinage,
- on exerce sur le plan de joint, pendant la formation du joint soudé, une pression de forgeage dirigée vers ce plan de joint pour expulser les oxydes, les impuretés et les composés intermétalliques se formant au niveau de ce plan de joint,
- l'axe du faisceau à haute densité d'énergie est incliné d'un angle compris 1 et 5°,
- le métal constituant le second flan métallique est de l'aluminium ou un alliage d'aluminium,
- on vaporise, au niveau du plan de joint et de part et d'autre des deux flans métalliques, un gaz de protection pour limiter la croissance des composés intermétalliques pendant la réalisation du joint soudé,
- on effectue, au niveau du plan de joint, un apport externe d'éléments inhibiteurs des composés intermétalliques pour limiter la croissance de ces composés intermétalliques pendant la réalisation du joint soudé,
- on vaporise, au niveau du plan de joint et de part et d'autre des deux flans métalliques, un gaz de protection et simultanément on effectue au niveau dudit plan de joint un apport externe d'éléments inhibiteurs des composés intermétalliques pour limiter la croissance de ces composés intermétalliques pendant la réalisation du joint soudé,
- le gaz de protection est choisi parmi l'azote ou le gaz carbonique,
- les éléments inhibiteurs sont choisis parmi le zinc, le silicium, le strontium ou l'argent.

L'invention a également pour objet une pièce de véhicule automobile, notamment de carrosserie et de structure, la pièce étant conformée à partir d'un flan métallique constitué d'au moins deux flans élémentaires, le premier flan élémentaire étant en acier et le second flan élémentaire en un matériau métallique dont la température de fusion est inférieure de plus de 400°C à la température de fusion de l'acier constitutif du premier flan élémentaire et lesdits flans élémentaires étant soudés bord à bord par le procédé mentionné ci-dessus.

Selon d'autres caractéristiques :

- le métal constitutif du second flan élémentaire est de l'aluminium ou de l'alliage d'aluminium,
- la pièce est conformée par emboutissage.

Les caractéristiques et avantages de l'invention apparaîtront au cours de la description qui va suivre, donnée uniquement à titre d'exemple et faite en référence aux dessins annexés, sur lesquels :

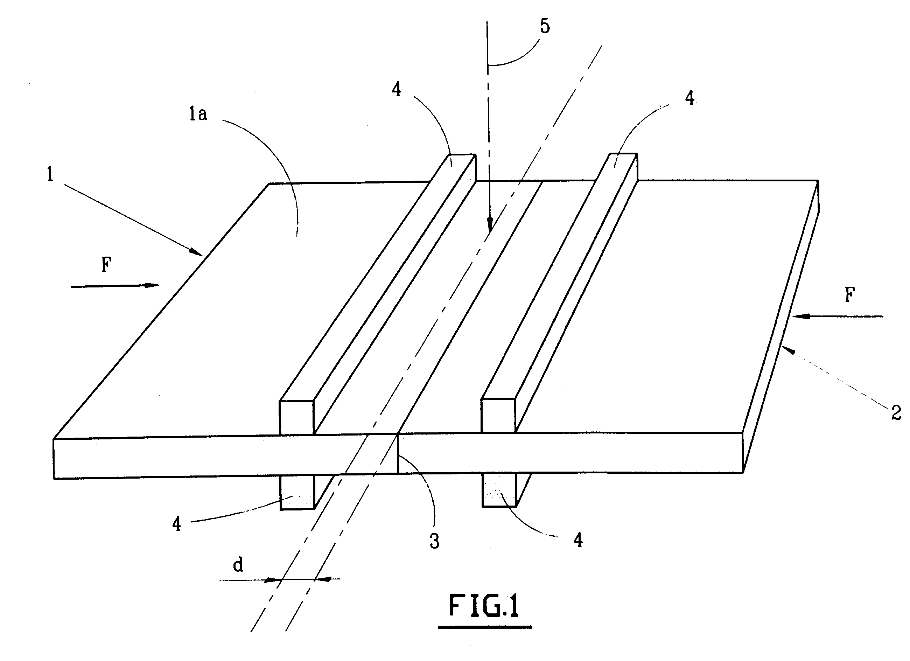

- la Fig. 1 est une vue schématique en perspective montrant le soudage de deux flans métalliques par le procédé selon l'invention,
- la Fig. 2 est une vue schématique en coupe transversale des deux flans métalliques pendant le soudage par le procédé selon l'invention.

Comme représenté sur les figures, le procédé selon l'invention est un procédé de soudage de deux flans métalliques 1 et 2 placés bord à bord au niveau de leurs faces latérales à souder pour former un plan de joint 3.

Les deux flans métalliques 1 et 2 peuvent être de même épaisseur ou avoir une épaisseur différente.

D'une manière générale, le procédé selon l'invention a pour objet le soudage de deux flans métalliques dont le premier, par exemple le flan métallique 1 est de l'acier et le second flan métallique 2 est en un matériau métallique dont la température de fusion $\theta 2$ est inférieure de plus de 400°C à la température de fusion $\theta 1$ de l'acier.

Dans ce qui suit et uniquement à titre d'exemple, le métal du flan métallique 2 est constitué par de l'aluminium ou un alliage d'aluminium possédant une température de fusion $\theta 2$ comprise entre 550 et 700°C alors que la température de fusion $\theta 1$ de l'acier est comprise entre 1450 et 1700°C, selon les nuances.

L'acier du flan métallique 1 peut être par exemple un acier à bas carbone, un acier doux, un acier inoxydable ou encore un acier à haute limite élastique.

Après avoir positionné les deux flans métalliques 1 et 2 en contact au niveau de leurs faces latérales à rabouter, les deux flans métalliques 1 et 2 sont maintenus en contact par des moyens de bridage constitués par exemple par des barres de bridage 4 placées sur les faces principales de chaque flan métallique 1 et 2.

Le maintien des flans métalliques 1 et 2 est réalisé à proximité du plan de joint 3 à une distance comprise entre 5 et 10mm de ce plan de joint 3.

Ensuite, un faisceau à haute densité d'énergie 5 est dirigé sur la face principale 1a du flan métallique 1.

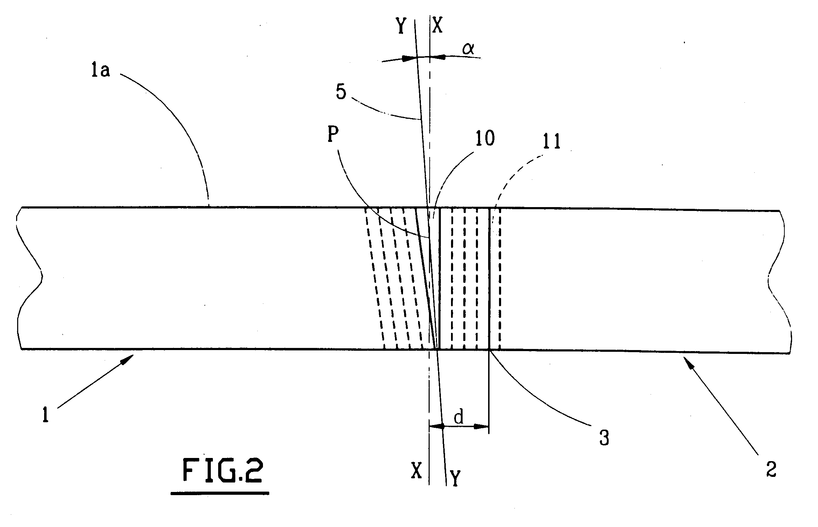

Comme représenté à la Fig. 2, le faisceau à haute densité d'énergie 5 traverse le flan métallique 1 et son point de focalisation P est situé sensiblement à un tiers de l'épaisseur du flan métallique 1 au-dessous de la face principale 1a dudit flan métallique 1 sur laquelle est dirigé le faisceau à haute densité d'énergie 5 et à une distance d déterminée du plan de joint 3 de manière à générer au niveau dudit plan de joint 3 une température égale à la température de fusion $\theta 2$ de l'aluminium ou de l'alliage d'aluminium du second flan métallique 2 plus ou moins 10%.

Le faisceau à haute densité d'énergie 5 est déplacé parallèlement au plan de joint 3 pour réaliser un joint soudé au niveau des faces latérales raboutées des deux flans métalliques 1 et 2.

Pendant le maintien des deux flans métalliques 1 et 2, une pression latérale F dirigée vers le plan de joint 3 est exercée sur lesdits flans métalliques 1 et 2 pour rattraper au niveau du plan de joint 3 les jeux d'usinage.

Dans le cas où les deux flans métalliques 1 et 2 ont la même épaisseur, la distance d entre l'axe vertical XX passant par le point de focalisation P du faisceau à haute densité d'énergie 5 et le plan de joint 3 est comprise entre 5 et 50% de l'épaisseur des flans métalliques et de préférence comprise entre 20 et 40%.

Dans le cas où les deux flans métalliques 1 et 2 n'ont pas la même épaisseur, la distance entre l'axe vertical passant par le point de focalisation P du faisceau à haute densité d'énergie 5 et le plan de joint 3 est comprise entre 5 et 50% de l'épaisseur du flan métallique ayant la plus faible épaisseur et de préférence comprise entre 20 et 40%.

Pour les flans métalliques ayant une épaisseur égale à 1mm ou pour des flans métalliques dont l'un a une épaisseur inférieure à l'épaisseur de l'autre flan métallique et égale à 1mm, la distance entre l'axe vertical passant par le point de focalisation P du faisceau à haute densité d'énergie 5 et le plan de joint 3 est comprise entre 0,2 et 0,4mm.

La distance optimale entre l'axe vertical XX passant par le point de focalisation P du faisceau à haute densité d'énergie 5 et le plan de joint 3 est déterminée par la formule suivante :

$$d_{opt} = \frac{\sqrt{2/\pi e} \times P}{(T_f - T_o) \times 2 \times e_p \times \rho \times c}$$

où :

P    est l'énergie linéaire pour fondre le volume décrit par la zone fondue de soudage,
e    est le log népérien de 10,
$T_f$    est la température de fusion du métal constituant le second flan métallique,
$T_o$    est la température ambiante,
$e_p$    est l'épaisseur du premier flan métallique en acier,
$\rho$    est la masse volumique de l'acier,
c    est la chaleur spécifique de l'acier.

Pour calculer l'énergie P, on peut utiliser la formule suivante :

$$P = Z \times \rho \times e_p \times (C \times \Delta T + \Delta H)$$

où :

Z    est la largeur de la zone fondue,
$\rho$    est la masse volumique de l'acier,
$e_p$    est l'épaisseur du premier flan métallique
$\Delta T$    $= T_f - T_o$
$\Delta H$    est l'enthalpie libre pour le changement de phase liquide/solide de l'acier constitutif du flan métallique en acier.

A titre d'exemple :

P    $= 3,3 KJ/m$
e    $= l_n 10$
$T_f$    $= 670°C$
$T_o$    $= 20°C$
$e_p$    $= 1.10^{-3} m$
$\rho$    $= 7,8.10^3 \ kg/m^3$
C    $= 420 \ J/kg°C$

ce qui donne en appliquant la formule ci-dessus une distance d'optimale égale à 0,4mm.

Comme cela apparaît à la Fig. 2, le faisceau à haute densité d'énergie 5 traverse l'épaisseur du flan métallique 1 ce qui permet homogénéiser la température dans l'épaisseur dudit flan métallique 1 sans avoir une grande zone affectée thermiquement en largeur.

Le faisceau à haute densité d'énergie 5 génère dans le flan métallique 1 une première zone non représentée et appelée "capillaire vapeur" et autour de cette première zone une seconde zone 10 appelée zone liquide qui a la forme d'un cône de très faible conicité.

Selon la loi de propagation de la chaleur dans l'acier et en fonction de la distance d déterminée entre le point de focalisation P et le plan de joint 3, l'isotherme 11 entourant la zone liquide 10 et se trouvant sensiblement au niveau dudit plan de joint 3 génère une température t au niveau de ce plan de joint 3 qui est égale sensiblement à la température de fusion θ2 de l'aluminium ou de l'alliage d'aluminium du second flan métallique 2 plus ou moins 10%.

Dans l'exemple présent, la température t est de l'ordre de 650°C ce qui ramollit une certaine épaisseur du matériau constituant le second flan métallique 2 et réalise des liaisons atomiques entre les deux matériaux des deux flans métalliques 1 et 2.

Si la température t au niveau du plan de joint 3 est inférieure à la température de fusion θ2 de l'aluminium ou de l'alliage d'aluminium moins 10%, on obtient une diffusion lente des atomes entre les deux matériaux et une vitesse de soudage lente, voire une impossibilité de réaliser la liaison soudée entre les deux flans métalliques 1 et 2.

Si la température t au niveau du plan de joint 3 est supérieure à la température de fusion θ2 de l'aluminium ou de l'alliage d'aluminium plus 10%, on obtient la formation de composés intermétalliques au niveau du plan de joint 3 et la formation de bourrelets ou de trous.

D'autre part, pendant la formation du joint soudé, une pression de forgeage dirigée vers le plan de joint 3 est exercée sur ce plan de joint 3.

Cette pression de forgeage qui est constante ou variable a pour but de maintenir les deux flans métalliques 1 et 2 en contact au niveau de leurs faces latérales et d'éviter ainsi toute modification de la surface par l'atmosphère de travail, comme par exemple par oxydation, ainsi que de permettre la réalisation de liaisons atomiques entre les deux matériaux et d'expulser les oxydes, les impuretés et les composés intermétalliques qui peuvent se trouver ou se former au niveau du plan de joint 3.

La pression latérale exercée au départ pour maintenir en contact les flans métalliques 1 et 2 peut être égale à celle qui permet l'expulsion des oxydes et des impuretés ou peut augmenter progressivement au cours du soudage pour atteindre la valeur de la pression de forgeage permettant cette expulsion.

De préférence, l'axe Y-Y du faisceau à haute densité d'énergie 5 forme avec l'axe vertical X-X passant par le point de focalisation P dudit faisceau, un angle $\alpha$ compris entre 1 et 5° de telle manière que les isothermes 11 générés par le faisceau à haute densité d'énergie 5 soient parallèles au plan de joint 3 pour obtenir un front thermique se propageant parallèlement à ce plan de joint 3, comme représenté à la figure 2.

Au cours de la réalisation de la liaison soudée, des composés intermétalliques ont tendance à se former et à fragiliser cette liaison soudée.

Dans le cas du soudage de l'acier avec de l'aluminium ou un alliage d'aluminium, ces composés intermétalliques sont constitués par du fer et de l'aluminium ou un complexe à base de fer et d'aluminium.

La densité d'énergie du faisceau à haute densité d'énergie 5, la distance d entre le point de focalisation P du faisceau à densité d'énergie 5 et le plan de joint 3, la pression latérale et la vitesse de soudage sont ajustées pour minimiser la formation d'une éventuelle couche de composés intermétalliques fragilisantes.

Mais, pour limiter la croissance des composés intermétalliques et de ce fait augmenter la déformabilité par emboutissage des liaisons soudées, plusieurs solutions sont envisageables.

La première solution consiste pendant la réalisation du joint soudé, à vaporiser au niveau du plan de joint 3 et de part et d'autre des deux flans métalliques 1 et 2 un gaz de protection choisi par exemple parmi l'azote, le gaz carbonique ou un gaz contenant du titane.

La seconde solution consiste à effectuer au niveau du plan de joint 3 un apport externe d'éléments inhibiteurs de ces composés intermétalliques.

Les éléments inhibiteurs sont choisis par exemple parmi le zinc, le silicium, le strontium ou l'argent et l'apport externe de ces éléments inhibiteurs est réalisé soit à l'aide d'un fil de soudage, soit à l'aide de poudres, soit à l'aide d'un insert interposé dans le plan de joint entre les faces latérales à souder des deux flans métalliques 1 et 2.

Une autre solution consiste à vaporiser au niveau du plan de joint 3 et de part et d'autre des deux flans métalliques 1 et 2 un gaz de protection et simultanément à effectuer au niveau dudit plan de joint 3 un apport externe d'éléments inhibiteurs de ces composés intermétalliques.

Le procédé de soudage selon l'invention présente donc l'avantage de pouvoir réaliser à des cadences élevées une liaison métallique continue entre deux flans métalliques de nature différente et dont l'un est de l'acier possédant une température de fusion supérieure de plus de 400°C à la température de fusion du métal constituant le second flan métallique, comme par exemple de l'acier avec de l'aluminium ou un alliage d'aluminium ce qui permet d'utiliser au mieux les propriétés de chacun des matériaux composant une même pièce.

Le procédé de soudage selon l'invention permet de réaliser des pièces de véhicules automobiles, notamment de carrosserie et de structure, conformées par emboutissage ou pliage à partir d'au moins deux flans en matériau métallique différent par exemple un flan en acier et un flan en aluminium ou en alliage d'aluminium.

## Revendications

1. Procédé de soudage bord à bord de deux flans métalliques (1, 2) dont le premier (1) est de l'acier et le second flan métallique (2) est en un matériau métallique dont la température de fusion $\theta 2$ est inférieure de plus de 400°C à la température de fusion $\theta 1$ de l'acier, comprenant les étapes suivantes:

   - on positionne les deux flans métalliques (1, 2) en contact au niveau de leurs faces latérales à rabouter,
   - on maintient les deux flans métalliques (1, 2) en contact par des moyens de bridage (4),
   - on dirige sur l'une des faces principales (1a) du premier flan métallique (1), un faisceau à haute densité d'énergie (5) traversant ce premier flan métallique (1) et dont le point de focalisation P est situé à une distance d déterminée du plan de joint (3) de manière à générer au niveau dudit plan de joint (3) une température t égale à la température de fusion $\theta 2$ du métal du second flan métallique plus ou moins 10%,
   - on déplace le faisceau à haute densité d'énergie (5) parallèlement au plan de joint (3) pour réaliser un joint soudé au niveau des faces latérales raboutées des deux flans métalliques (1 et 2).

2. Procédé de soudage selon la revendication 1, caractérisé en ce que la distance d entre l'axe vertical passant par le point de focalisation P du faisceau à haute densité d'énergie (5) et le plan de joint (3) est comprise entre 5 et 50% de l'épaisseur du flan métallique (1, 2) ayant la plus faible épaisseur.

3. Procédé de soudage selon les revendications 1 et 2, caractérisé en ce que la distance d entre l'axe vertical passant par le point de focalisation P du faisceau à haute densité d'énergie (5) et le plan de joint (3) est comprise entre 20 et 40% de l'épaisseur du flan métallique (1, 2) ayant la plus faible épaisseur.

4. Procédé de soudage selon l'une quelconque des revendications 1 à 3, caractérisé en ce que la distance d entre l'axe vertical passant par le point de focalisation P du faisceau à haute densité d'énergie (5) et le plan de joint (3) est comprise entre 0,2 et 0,4mm pour des flans métalliques (1, 2) d'épaisseur égale à 1mm.

5. Procédé de soudage selon l'une quelconque des revendications 1 à 3, caractérisé en ce que la distance optimale entre l'axe vertical passant par le point de focalisation P du faisceau à haute densité d'énergie (5) et le plan de joint (3) est déterminée par la formule :

$$d_{opt} = \frac{\sqrt{2/\pi e} \times P}{(T_f - T_o) \times 2 \times e_p \times \rho \times c}$$

où :

P     est l'énergie linéaire nécessaire pour fondre le volume décrit par la zone fondue en soudage,

e     est le log népérien de 10,

$T_f$     est la température de fusion du métal constituant le second flan métallique,

$T_o$     est la température ambiante,

$e_p$     est l'épaisseur du premier flan métallique en acier,

$\rho$     est la masse volumique de l'acier,

c     est la chaleur spécifique de l'acier.

6. Procédé de soudage selon la revendication 1, caractérisé en ce que le maintien des deux flans métalliques (1, 2) en contact est réalisé à proximité du plan de joint (3) de ces flans métalliques (1, 2).

7. Procédé de soudage selon les revendications 1 et 6, caractérisé en ce que pendant le maintien des deux flans métalliques (1, 2), on exerce une pression latérale dirigée vers le plan de joint (3) pour rattraper au niveau dudit plan de joint (3) les jeux d'usinage.

8. Procédé de soudage selon l'une quelconque des revendications 1 à 7, caractérisé en ce que pendant la formation du joint soudé, on exerce sur le plan de joint (3) une pression de forgeage dirigée vers ce plan de joint (3) pour expulser les oxydes, les impuretés et les composés intermétalliques se formant au niveau de ce plan de joint (3).

9. Procédé de soudage selon la revendication 1, caractérisé en ce que l'axe du faisceau à haute densité d'énergie (5) est incliné d'un angle compris 1 et 5°.

10. Procédé de soudage selon l'une quelconque des revendications 1 à 8, caractérisé en ce que le métal constituant le second flan métallique (2) est de l'aluminium ou un alliage d'aluminium.

11. Procédé de soudage selon l'une quelconque des revendications 1 à 10, caractérisé en ce que pour limiter la croissance des composés intermétalliques pendant la réalisation du joint soudé, on vaporise au niveau du plan de joint (3) et de part et d'autre des deux flans métalliques (1) et (2) un gaz de protection.

12. Procédé de soudage selon l'une quelconque des revendications 1 à 10, caractérisé en ce que pour limiter la croissance des composés intermétalliques pendant la réalisation du joint soudé, on effectue au niveau du plan de joint (3) un apport externe d'éléments inhibiteurs de ces composés intermétalliques.

13. Procédé de soudage selon l'une quelconque des revendications 1 à 10, caractérisé en ce que pour limiter la croissance des composés intermétalliques pendant la réalisation du joint soudé, on vaporise au niveau du plan de joint (3) et de part et d'autre des deux flans métalliques (1, 2) un gaz de protection et simultanément on effectue au niveau dudit plan de joint (3) un apport externe d'éléments inhibiteurs de ces composés intermétalliques.

14. Procédé de soudage selon les revendications 10, 11 et 13, caractérisé en ce que le gaz de protection est choisi parmi l'azote ou le gaz carbonique.

15. Procédé de soudage selon les revendications 10, 12 et 13, caractérisé en ce que les éléments inhibiteurs sont choisis parmi le zinc, le silicium, le strontium ou l'argent.

16. Pièce de véhicule automobile, notamment de carrosserie et de structure, la pièce étant conformée à partir d'un flan métallique constitué d'au moins deux flans élémentaires (1, 2), le premier (1) étant en acier et le second (2) en un matériau métallique dont la température de fusion θ2 est inférieure de plus de 400°C à la température de fusion θ1 de l'acier constitutif du premier flan élémentaire (1) et lesdits flans élémentaires (1, 2) étant soudés bord à bord par le procédé selon l'une quelconque des revendications 1 à 15.

17. Pièce de véhicule automobile selon la revendication 16, caractérisée en ce que le métal constitutif du second flan élémentaire (2) est de l'aluminium ou de l'alliage d'aluminium.

**18.** Pièce de véhicule automobile selon l'une des revendications 16 et 17, caractérisée en ce qu'elle est conformée par emboutissage.

**Claims**

1. Method for butt-welding two metallic sheets (1, 2), the first (1) of which is made of steel and the second metallic sheet (2) is made from a metallic material, the melting point θ2 of which is lower by more than 400°C than the melting point θ1 of the steel, comprising the following steps:

   - the two metallic sheets (1, 2) are positioned in contact at the level of their lateral edges to be butted together,
   - the two metallic sheets (1, 2) are kept in contact by clamping means (4),
   - onto one of the main edges (1a) of the first metallic sheet (1) there is directed a high energy density beam (5) passing through this first metallic sheet (1) and the focalisation point P of which is situated at a determined distance d from the joint face (3) so as to generate at the level of said joint face (3) a temperature t equal to the melting point θ2 of the metal of the second metallic sheet by more or less 10 %,
   - the high energy density beam (5) is displaced parallel to the joint face (3) so as to realise a weld joint at the level of the lateral butted edges of the two metallic sheets (1 and 2).

2. Method for butt-welding according to Claim 1, characterised in that the distance d between the vertical axis passing through the focalisation point P of the high energy density beam (5) and the joint face (3) is between 5 and 50 % of the thickness of the metallic sheet (1, 2), having the smallest thickness.

3. Method for butt-welding according to Claims 1 and 2, characterised in that the distance d between the vertical axis passing through the focalisation point P of the high energy density beam (5) and the joint face (3) is between 20 and 40 % of the thickness of the metallic sheet (1, 2), having the smallest thickness.

4. Method for butt-welding according to any one of the Claims 1 to 3 characterised in that the distance d between the vertical axis passing through the point of focalisation P of the high energy density beam (5) and the joint face (3) is between 0.2 and 0.4 mm for metallic sheets (1, 2) with a thickness equal to 1mm.

5. Method for butt-welding any one of the Claims 1 to 3, characterised in that the optimal distance between the vertical axis passing through the focalisation point P of the high energy density beam (5) and the joint face (3) is determined by the formula

$$d_{opt} = \frac{\sqrt{2/\pi}\,e \times P}{(T_f - T_o) \times 2 \times e_p \times \rho \times c}$$

where:

P     is the linear energy required for melting the volume delimited by the zone melted during welding,
e     is the Napierian log of 10,
$T_f$     is the melting point of the metal constituting the second metallic sheet,
$T_o$     is the ambient temperature,
$e_p$     the thickness of the first metallic sheet made of steel,
ρ     is the volume mass of the steel,
c     is the specific heat of the steel.

6. Method for butt-welding according to Claim 1, characterised in that the two metallic sheets (1, 2) are kept in contact next to the joint face (3) of these metallic sheets (1, 2).

7. Method for butt-welding according to Claims 1 to 6, characterised in that while restraining the two metallic sheets (1, 2) lateral pressure directed towards the joint face (3) is exerted in order to eliminate any processing clearance at the level of said joint face (3).

8. Method for butt-welding according to any one of the Claims 1 to 7, characterised in that during the formation of the weld joint forging pressure is exercised on the joint face (3) towards this joint face (3) in order to expel the oxides, the impurities and the intermetallic alloys being formed at the level of this joint face (3).

9. Method for butt-welding according to Claim 1, characterised in that the axis of the high energy density beam (5) is inclined at an angle between 1 and 5°.

10. Method for butt-welding according to any one of the Claims 1 to 8, characterised in that the metal constituting the second metallic sheet (2) is made of aluminium or an aluminium alloy.

11. Method for butt-welding according to any one of the Claims 1 to 10, characterised in that in order to limit the formation of intermetallic alloys during production of the weld joint, a shielding gas is vaporised at the level of the joint face (3) and on both sides of the two metallic sheets (1) and (2).

12. Method for butt-welding according to any one of the Claims 1 to 10, characterised in that in order to limit the formation of intermetallic alloys during production of the weld joint there is provided at the level of the joint face (3) an external supply of inhibiting elements for these intermetallic alloys.

13. Method for butt-welding according to any one of the Claims 1 to 10, characterised in that in order to limit the formation of intermetallic alloys during production of the weld joint a shielding gas is vaporised at the level of the joint face (3) and on both sides of the two metallic sheets (1, 2) and at the same time there is provided at the level of said joint face (3) an external supply of inhibiting elements for these intermetallic alloys.

14. Method for butt-welding according to the Claims 10, 11 and 13, characterised in that the shielding gas is selected from nitrogen or carbon dioxide.

15. Method for butt-welding according to Claims 10, 12 and 13, characterised in that the inhibitor elements are selected from zinc, silicon, strontium or silver.

16. Automobile vehicle part, particularly the body and the structure, said part being formed from a metallic sheet constituted from at least two elementary sheets (1, 2), the first (1) being made of steel and the second (2) of a metallic material, the melting point $\theta 2$ of which is lower by more than 400° than the melting point $\theta 1$ of the steel forming the elementary sheet (1) and said elementary sheets (1, 2) being butt-welded by means of the method according to any one of the Claims 1 to 15.

17. Automobile vehicle part according to Claim 16, characterised in that the constitutive metal of the second elementary sheet (2) is of aluminium or aluminium alloy.

18. Automobile vehicle part according to one of the Claims 16 and 17, characterised in that it is formed by drawing.

**Patentansprüche**

1. Schweißverfahren für die stumpfe Verschweißung von zwei metallischen Blechplatten (1, 2), von denen die erste (1) aus Stahl besteht, während die zweite metallische Blechplatte (2) aus einem metallischen Werkstoff hergestellt ist, dessen Schmelztemperatur $\theta 2$ um mehr als 400° C niedriger ist, als die Schmelztemperatur $\theta 1$ des Stahls, und das folgende Schritte umfaßt:
die beiden Blechplatten (1, 2) werden an ihren beiden zu verbindenden Seitenrändern aneinander angesetzt,

- die beiden Blechplatten (1, 2) werden mittels Spannvorrichtungen (4) zusammengehalten,
- auf eine der Hauptflächen (1a) der ersten Blechplatte (1) wird ein Schweißstrahl (5) hoher Intensität gerichtet, welcher die erste metallische Blechplatte (1) durchquert und dessen Brennpunkt P in einem vorbestimmten Abstand von der Verbindungsnaht (3) so angeordnet ist, daß an dieser Verbindungsnaht (3) eine Temperatur t erzeugt wird, die gleich der Schmelztemperatur $\theta 2$ des Metalls der zweiten Blechplatte (2) ±10 % ist,
- der Schweißstrahl (5) hoher Intensität wird parallel zu der Verbindungsnaht (3) bewegt, um dadurch eine Schweißnaht an den angesetzten Seitenrändern dieser beiden Blechplatten (1, 2) herzustellen.

2. Schweißverfahren nach Anspruch 1,
**dadurch gekennzeichnet, daß**
der Abstand d zwischen der vertikalen Achse, welche den Brennpunkt P des Schweißstrahls (5) hoher Intensität und die Verbindungsnaht (3) durchquert, zwischen 5 und 50 % der Wandstärke der Blechplatte (1, 2), beträgt, welche die geringste Wandstärke hat.

3. Schweißverfahren nach einem der Ansprüche 1 und 2,
**dadurch gekennzeichnet, daß**
der Abstand d zwischen der vertikalen Achse, welche den Brennpunkt P des Schweißstrahls (5) hoher Intensität und die Verbindungsnaht (3) durchquert, zwischen 20 und 40 % der Wandstärke der metallischen Blechplatte (1, 2) mit der geringsten Wandstärke beträgt.

4. Schweißverfahren nach einem der Ansprüche 1 bis 3,
**dadurch gekennzeichnet, daß**
der Abstand d zwischen der vertikalen Achse, welche den Brennpunkt P des Schweißstrahls (5) hoher Intensität und die Verbindungsnaht (3) durchquert, bei metallischen Blechplatten (1, 2) mit der gleichen Wandstärke von 1 mm zwischen 0,2 und 0,4 mm beträgt.

5. Schweißverfahren nach einem der Ansprüche 1 bis 3,
**dadurch gekennzeichnet, daß**
der optimale Abstand zwischen der vertikalen Achse, welche den Brennpunkt P des Schweißstrahls (5) hoher Intensität und die Verbindungsnaht (3) durchquert, durch folgende Formel bestimmt wird:

$$d_{opt} = \frac{\sqrt{2/\pi e} \times P}{(T_f - T_o) \times 2 \times e_p \times \rho \times c}$$

darin ist:

P     die lineare Energie, welche notwendig ist, um das Volumen zu schmelzen, welches von dem Schmelzbereich während der Schweißung eingenommen wird,

e     der natürliche Logarithmus $\log_{10}$,

$T_f$     die Schmelztemperatur des Metalls der zweiten Blechplatte,

$T_o$     die Umgebungstemperatur,

$e_p$     die Wandstärke der ersten Blechplatte aus Stahl,

$\rho$     die Rohdichte des Stahls,

c     die spezifische Wärme des Stahls.

6. Schweißverfahren nach Anspruch 1,
**dadurch gekennzeichnet, daß**
der Kontakt zwischen den beiden metallischen Blechplatten (1,2) in der Nähe der Verbindungsnaht (3) dieser beiden Blechplatten (1,2) hergestellt wird.

7. Schweißverfahren nach einem der Ansprüche 1 bis 6,
**dadurch gekennzeichnet, daß**
während dem Zusammenhalten der beiden metallischen Blechplatten (1, 2) ein gegen die Verbindungsnaht (3) gerichteter seitlicher Druck beaufschlagt wird, um an dieser Verbindungsnaht (3) die Fertigungstoleranzen auszugleichen.

8. Schweißverfahren nach einem der Ansprüche 1 bis 7,
**dadurch gekennzeichnet, daß**

- während der Herstellung der Schweißnaht auf die Verbindungsnaht (3) ein auf diese Verbindungsnaht (3) gerichteter Schmiededruck beaufschlagt wird, um Oxide, Verunreinigungen und intermetallische Verbindungen auszutreiben, welche sich an dieser Verbindungsnaht (3) bilden können.

9. Schweißverfahren nach Anspruch 1,
**dadurch gekennzeichnet, daß**
die Achse des Schweißstrahls (5) hoher Intensität in einem Winkel zwischen 1 und 5° geneigt wird.

10. Schweißverfahren nach einem der Ansprüche 1 bis 8,
**dadurch gekennzeichnet, daß**
das Metall der zweiten Blechplatte (2) aus Aluminium oder einer Aluminiumlegierung besteht.

11. Schweißverfahren nach einem der Ansprüche 1 bis 10,
**dadurch gekennzeichnet, daß**
zur Begrenzung des Wachstums von intermetallischen Verbindungen während der Herstellung der Schweißnaht auf die Verbindungsnaht (3) und auf beide Seiten der Blechplatten (1, 2) ein Schutzgas aufgesprüht wird.

12. Schweißverfahren nach einem der Ansprüche 1 bis 10,
**dadurch gekennzeichnet, daß**
zur Begrenzung des Wachstums von intermetallischen Verbindungen während der Herstellung der Schweißnaht auf die Verbindungsnaht (3) von außen Elemente aufgebracht werden, welche diese intermetallischen Verbindungen hemmen.

13. Schweißverfahren nach einem der Ansprüche 1 bis 10,
**dadurch gekennzeichnet, daß**
zur Begrenzung des Wachstums von intermetallischen Verbindungen wahrend der Herstellung der Schweißnaht auf die Verbindungsnaht (3) und auf beide Seiten der Blechplatten (1, 2) ein Schutzgas aufgesprüht wird und gleichzeitig von außen auf die Verbindungsnaht (3) Elemente aufgebracht werden, welche diese intermetallischen Verbindungen hemmen.

14. Schweißverfahren nach einem der Ansprüche 10, 11 und 13,
**dadurch gekennzeichnet, daß**
das verwendete Schutzgas entweder Stickstoff oder Kohlendioxid ist.

15. Schweißverfahren nach einem der Ansprüche 10, 12 und 13,
**dadurch gekennzeichnet, daß**
die hemmenden Elemente aus Zink, Silizium, Strontium oder Silber bestehen.

16. Automobilteil, insbesondere ein Teil einer Karosserie oder einer Fahrzeugstruktur, wobei dieses Teil aus einer metallischen Blechplatte hergestellt wird, die aus mindestens zwei Basisblechen (1, 2) besteht, wobei das erste Basisblech (1) aus Stahl hergestellt ist, während das zweite Basisblech (2) aus einem Metall besteht, dessen Schmelztemperatur $\theta 2$ um mehr als 400° C niedriger ist, als die Schmelztemperatur $\theta 1$ des Stahls des ersten Basisbleches (1), und diese beiden Basisbleche (1,2) mit Hilfe des Verfahrens nach einem der Ansprüche 1 bis 15 stumpf miteinander verschweißt werden.

17. Automobilteil nach Anspruch 16,
**dadurch gekennzeichnet, daß**

das Metall des zweiten Basisbleches (2) aus Aluminium oder einer Aluminiumlegierung besteht.

**18.** Automobilteil nach einem der Ansprüche 16 und 17,
**dadurch gekennzeichnet, daß**
dieses Teil tiefgezogen wird.

FIG.1

FIG.2